(19) Europäisches Patentamt / European Patent Office / Office européen des brevets

(11) **EP 3 852 304 B1**

(12) **FASCICULE DE BREVET EUROPEEN**

(45) Date de publication et mention
de la délivrance du brevet:
**22.11.2023 Bulletin 2023/47**

(21) Numéro de dépôt: **21150948.4**

(22) Date de dépôt: **11.01.2021**

(51) Classification Internationale des Brevets (IPC):
**H04L 9/08** *(2006.01)* **G06F 7/58** *(2006.01)*
**H04L 9/30** *(2006.01)*

(52) Classification Coopérative des Brevets (CPC):
**H04L 9/0869; G06F 7/58; H04L 9/3093;**
**H04L 2209/125**

(54) **DISPOSITIF ET PROCÉDÉ DE GÉNÉRATION D'UN NOMBRE ALÉATOIRE TIRÉ SELON UNE LOI NON UNIFORME**

VORRICHTUNG UND VERFAHREN ZUR ERZEUGUNG EINER NACH EINEM UNEINHEITLICHEN GESETZ GEZOGENEN ZUFALLSZAHL

DEVICE AND METHOD FOR GENERATING A RANDOM NUMBER DRAWN ACCORDING TO A NON-UNIFORM LAW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.01.2020 FR 2000335**

(43) Date de publication de la demande:
**21.07.2021 Bulletin 2021/29**

(73) Titulaire: **Commissariat à l'Energie Atomique et aux Energies Alternatives**
**75015 Paris (FR)**

(72) Inventeur: **HISCOCK, Thomas**
**38054 Grenoble Cedex 09 (FR)**

(74) Mandataire: **INNOV-GROUP**
**310, avenue Berthelot**
**69372 Lyon Cedex 08 (FR)**

(56) Documents cités:
- **PEIKERT CHRIS ED - ANDO N ET AL: "An Efficient and Parallel Gaussian Sampler for Lattices", 15 août 2010 (2010-08-15), ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 80 - 97, XP047270451, ISBN: 978-3-642-17318-9 * section 4.1 ***
- **CHAOHUI DU ET AL: "Towards efficient discrete Gaussian sampling for lattice-based cryptography", 2015 25TH INTERNATIONAL CONFERENCE ON FIELD PROGRAMMABLE LOGIC AND APPLICATIONS (FPL), IMPERIAL COLLEGE, 2 septembre 2015 (2015-09-02), pages 1-6, XP032791503, DOI: 10.1109/FPL.2015.7293949**
- **Thomas Pöppelmann ET AL: "Enhanced Lattice-Based Signatures on Reconfigurable Hardware Extended Version", , 20 février 2015 (2015-02-20), XP055721929, Extrait de l'Internet: URL:https://eprint.iacr.org/2014/254.pdf [extrait le 2020-08-12]**

## Description

L'invention concerne un dispositif et un procédé de génération d'un nombre aléatoire codé sur $N_k$ bits et tiré selon une loi de probabilité non-uniforme discrète et bornée. L'invention a également pour objet un support d'enregistrement pour la mise en oeuvre de ce procédé.

Une loi de probabilité non-uniforme est une loi de probabilité différente d'une loi uniforme. Une loi uniforme est une loi dont la densité de probabilité est constante sur son support.

De tels dispositifs sont, par exemple, utilisés en cryptographie et, en particulier, dans le domaine de la cryptographie basée sur les réseaux euclidiens. La cryptographie basée sur les réseaux euclidiens est une branche très active de la cryptographie. Elle permet la construction de schémas efficaces et conjecturés résistant à l'ordinateur quantique, ou encore la construction de primitives avancées comme le chiffrement homomorphe ou le chiffrement basé sur l'identité. On peut citer comme exemple de schémas de chiffrement LWE ("Learning With Error"), Ring-LWE, ou encore les schémas de signature BLISS ("Basic Interoperable Scrambling System") et les schémas de chiffrement homomorphe ("Homomorphic encryption" en anglais) tels que FV ou BGV ("Brakerski-Gentry-Vaikuntanathan").

Une spécificité commune à de très nombreux schémas basés sur les réseaux euclidiens est la nécessité de générer des nombres aléatoires tirés selon une loi de probabilité non-uniforme discrète et bornée telle qu'une loi gaussienne.

De l'état de la technique est connu de :

- Peikert Chris ED et AL : "An efficient and parallel Gaussian sampler for lattices", 15 aout 2010, Annual International Conférence on the Theory and applications of cryptographie techniques, Eurocrypt 2018, Berlin, Heidelberg, pages 80-97,
- Chaohui Du et Al : "Toward efficient discrète Gaussian sampling for lattice-based cryptography", 2015 25th International Conférence on Field Programmable Logic and Application, Imperial College, 2/09/2015, pages 1-6,
- Thomas Poppelman et Al : "Enhanced Lattice-Based Signature on Reconfigurable Hardware Extended Version", 20/02/2015,

L'invention vise à proposer un tel dispositif de génération d'un nombre aléatoire tiré selon une loi non-uniforme discrète et bornée qui soit plus rapide que les dispositifs connus. Elle a donc pour objet un tel dispositif de génération d'un nombres aléatoires conforme à la revendication 1.

L'invention a également pour objet un procédé de génération d'un nombre aléatoire conforme à la revendication 10.

L'invention a également pour objet un support d'enregistrement d'informations, lisible par un microprocesseur, comportant des instructions pour exécuter le procédé ci-dessus de génération d'un nombre aléatoire lorsque ces instructions sont exécutées par le microprocesseur.

L'invention sera mieux comprise à la lecture de la suite de la description donnée uniquement à titre d'exemple non limitatif et faite en se référant aux dessins sur lesquels :

- la figure 1 est une illustration schématique de la densité de probabilité d'une loi gaussienne ;
- la figure 2 est une illustration schématique de l'architecture d'un dispositif de génération de nombres aléatoires ;
- la figure 3 est une illustration schématique d'une table tronquée mise en oeuvre dans le dispositif de la figure 2 ;
- la figure 4 est une illustration schématique d'une table complète simplifiée mise en oeuvre dans le dispositif de la figure 2 ;
- la figure 5 est une illustration schématique d'une architecture matérielle d'un échantillonneur rapide mis en oeuvre dans le dispositif de la figure 2 ;
- la figure 6 est une illustration schématique d'une architecture matérielle possible d'un échantillonneur lent mis en oeuvre dans le dispositif de la figure 2 ;
- la figure 7 est un organigramme d'un procédé de génération d'un nombre aléatoire à l'aide du dispositif de la figure 2.

Par la suite, les définitions, notations et conventions utilisées dans l'ensemble de ce texte sont d'abord décrites dans un chapitre I. Ensuite, un exemple détaillé de mode de réalisation est décrit dans le chapitre II en référence aux figures. Dans un chapitre III suivant, des variantes de ce mode de réalisation détaillé sont présentées. Enfin, dans un chapitre IV, les avantages des différents modes de réalisation décrits sont énumérés.

Chapitre I : Définitions, notations et conventions

Dans la suite de cette description, les caractéristiques et fonctions bien connues de l'homme du métier ne sont pas décrites en détail.

Le terme « valeur binaire » d'un nombre désigne la valeur de ce nombre exprimée en utilisant la base 2.

L'expression "une variable Y codée sur N bits" signifie que la taille de cette variable Y, en nombre de bits, est égale à N.

Dans ce texte, les variables aléatoires sont en lettre capitale X et les apparitions de cette variable X sont notées en minuscule x.

Une loi de probabilité p est une loi qui donne la probabilité $p(x)$ qu'un événement x se produise, c'est-à-dire la probabilité $p(x)$ que la variable X soit égale à x.

Une loi de probabilité continue est une loi qui est définie sur un support continu de valeurs. Autrement dit, les valeurs x possibles de la variable X forment une plage continue de valeurs, comme par exemple, l'ensemble des nombres réels.

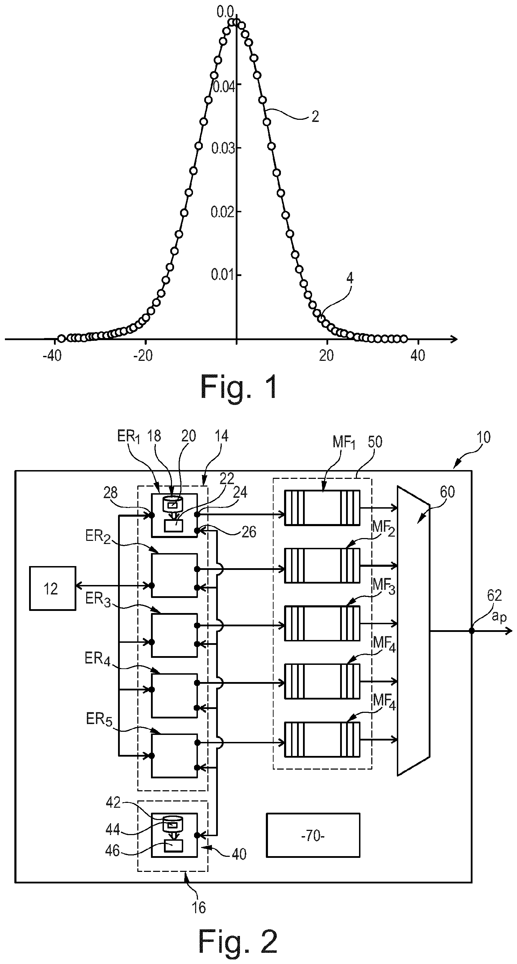

La figure 1 représente une densité 2 de probabilité d'une loi de probabilité gaussienne continue.

Une loi de probabilité discrète est une loi qui est définie sur un support discret de valeurs. Autrement dit, les valeurs x possibles de la variable X sont des valeurs discrètes, comme par exemple, l'ensemble des nombres entiers. Les cercles sur la figure 1 représentent une densité 4 de probabilité discrète d'une loi gaussienne discrète.

Une loi de probabilité bornée est une loi qui est définie sur un support borné. Autrement dit, toutes les valeurs x possibles de la variable X appartiennent à un intervalle borné situé entre un minorant $x_{min}$ et un majorant $x_{max}$.

Une loi gaussienne, également appelée loi normale, est une loi dont la densité de probabilité est définie par la relation (1) suivante :

$$\rho_{\mu,\sigma^2}(x) = \frac{1}{\sqrt{2\pi\sigma^2}} e^{-(x-\mu)^2/2\sigma^2}$$

où :

- $\mu$ est la moyenne,
- $\sigma$ est l'écart type,
- le symbole « e » désigne la fonction exponentielle.

Une loi gaussienne discrète et bornée est définie par la relation (2) suivante :

$$\rho_{\mu,\sigma,I}(x) = \frac{\rho_{\mu,\sigma^2}(x)}{\sum_{k \in I} \rho_{\mu,\sigma^2}(k)}$$

où I est un intervalle borné qui contient toutes les valeurs discrètes x possibles de la variable X.

Ici, l'intervalle I est un sous-ensemble fini de l'ensemble des nombres entiers.

On note $-n\sigma$ et $n\sigma$ , respectivement, les bornes inférieure et supérieure de l'intervalle I, où n est un nombre entier et $\sigma$ est l'écart-type de la loi gaussienne discrète. Pour que la loi gaussienne discrète et bornée $\rho_{\mu,\sigma,I}$ soit une bonne approximation d'une loi gaussienne non bornée, n est typiquement choisi supérieur à huit ou dix. Par exemple, par la suite n est choisi égal à douze.

Pour limiter la taille de l'intervalle I, l'écart type $\sigma$ est choisi petit. Dans ce texte, l'écart type $\sigma$ est considéré comme petit s'il est inférieur ou égal à dix ou cinq et, de préférence, inférieur ou égal à quatre. Dans la plupart des applications concrètes, l'écart type $\sigma$ est choisi proche de trois.

Par la suite, chaque valeur discrète de l'intervalle I est appelée « échantillon k ». Le nombre d'échantillons k contenus dans l'intervalle I est égal à $2^{Nk}$, où le nombre $N_k$ est un nombre entier. Ici, chaque échantillon k est identifié par un numéro d'ordre compris entre 0 et $2^{Nk}-1$. Par la suite, pour simplifier la description, chaque échantillon k est pris égal à ce numéro d'ordre. Ainsi, chaque échantillon k est codé sur $N_k$ bits.

Une densité cumulative de probabilité, également connue sous l'acronyme CDT (« Cumulative Distribution Function »), est la fonction F qui renvoie la probabilité $F(x)$ que la variable X prenne une valeur inférieure ou égale à x. Cette densité cumulative de probabilité est construite à partir de la loi de probabilité p.

Par la suite, on note $F(k)$ la probabilité que la variable X prenne une valeur inférieure ou égale à k dans le cas où la loi p est une loi de probabilité discrète définie sur le support I. La probabilité $F(k)$ est codée sur $N_F$ bits. Pour obtenir une bonne approximation de la loi de probabilité continue, le nombre $N_F$ est habituellement supérieur à 16 ou 32 et, de préférence, supérieur à 64 ou 128. Par exemple, par la suite, le nombre $N_F$ est égal à 128. Comme toutes les valeurs F(k) sont calculées comme une probabilité, elles sont comprises entre 0 et 1.

L'échantillonnage par inversion, également connu sous l'expression anglaise de « inversion sampling », est un procédé dans lequel :

- un nombre aléatoire r est tiré selon une loi uniforme de probabilité, puis
- un échantillonneur recherche le seul échantillon k qui appartient à l'intervalle I et pour lequel la condition (1) suivante est vérifiée : $F(k-1) < r \leq F(k)$, où :

    - F est la densité cumulative de probabilité de la loi de probabilité ρ, et
    - ρ est une loi de probabilité non-uniforme, puis

- l'échantillon k trouvé est transmis en tant que nombre aléatoire généré selon la loi ρ.

Typiquement, l'échantillon k est recherché dans une table complète qui, à chaque échantillon k, associe la probabilité F(k) correspondante. Cette table est souvent désignée par l'acronyme LUT (« Lookup Table »). Cette table est d'autant plus grande que le nombre $N_k$ est grand. Typiquement, cette table contient $2^{Nk}$ échantillons k.

Certaines lois de probabilité, comme la loi gaussienne de moyenne nulle, présentent une densité de probabilité symétrique par rapport à l'échantillon k=0. Une telle loi symétrique est associée à une loi p' positive correspondante définie uniquement sur la partie positive de l'intervalle I. Cette loi p' positive est définie par la relation (3) suivante :

$$\rho'(0) = \rho(0)$$
$$\rho'(k) = 2\rho(k), \quad k \in \,]0\,;n\sigma\,]$$

Une telle loi positive p' est avantageusement utilisée à la place de la loi p dans un échantillonneur et, en particulier, dans un échantillonneur qui réalise un échantillonnage par inversion. En effet, la loi positive p' est définie sur un intervalle I' qui est deux fois plus petit que l'intervalle I tout en conservant la possibilité d'obtenir simplement les échantillons k tirés selon la loi p. Plus précisément, pour cela, un échantillon k' est tiré selon la loi ρ' et un bit aléatoire b est tiré selon la loi uniforme. L'échantillon k est alors égal à $b_s k'$, où $b_s$ est égal à +1 lorsque le bit aléatoire b tiré est égal à 1 et est égal à -1 lorsque le bit aléatoire b tiré est égal à zéro.

Chapitre II : Exemples de modes de réalisation

La figure 2 représente un dispositif 10 de génération d'un nombre aléatoire $a_l$ tiré selon une loi p de probabilité non-uniforme discrète et bornée. Dans cet exemple de réalisation, la loi p est une loi gaussienne discrète et bornée telle que celle définie dans le chapitre I précédent. La moyenne μ est ici choisie égale à zéro. L'écart type σ est supérieur à zéro et, généralement, inférieur à vingt ou dix. En pratique l'écart type σ est souvent compris entre deux et quatre. L'intervalle I borné sur lequel est définie la loi p est égal à l'intervalle [- nσ ; +nσ] avec n inférieur ou égal à trente ou vingt. En pratique, n est souvent inférieur à douze. Ici, n est compris entre huit et douze.

Dans ce mode de réalisation, le dispositif 10 est implémenté sous la forme d'un dispositif matériel et chacun des composants du dispositif 10 décrit par la suite se présentent sous la forme d'un composant matériel.

Le dispositif 10 comporte :

- un générateur 12 de nombre aléatoire,
- un niveau 14 d'échantillonnage rapide, et
- un niveau 16 d'échantillonnage lent.

Le générateur 12 est apte à générer un nombre aléatoire r selon une loi uniforme, où r est un nombre aléatoire codé sur $N_r$ bits. Ici, les nombres $N_r$ et $N_F$ sont égaux. Ici, le nombre $N_r$ est supérieur à 16 ou 32 et, de préférence, supérieur ou égal à 64 ou 100 ou 128. Dans cet exemple de réalisation, le nombre $N_r$ est égal à 128. Plus précisément, le générateur 12 est apte à générer d'abord les $N_{msb}$ bits de poids fort du nombre aléatoire r, puis si nécessaire, à générer les $N_{lsb}$ bits suivants de poids faible du nombre aléatoire r. De préférence, le nombre $N_{msb}$ est cinq ou dix fois plus petit que le nombre $N_r$. Le nombre $N_{msb}$ est ici inférieur ou égal à dix et, de préférence, supérieur ou égal à trois ou quatre. Par exemple, dans ce mode de réalisation, le nombre $N_{msb}$ est choisi égal à quatre. Le nombre $N_{lsb}$ est égal

à ($N_r$ - Nmsb).

Les $N_{msb}$ bits de poids fort du nombre r forment un nombre aléatoire noté $r_{msb}$ par la suite. Les $N_{lsb}$ bits de poids faible forment un nombre aléatoire noté par la suite $r_{lsb}$.

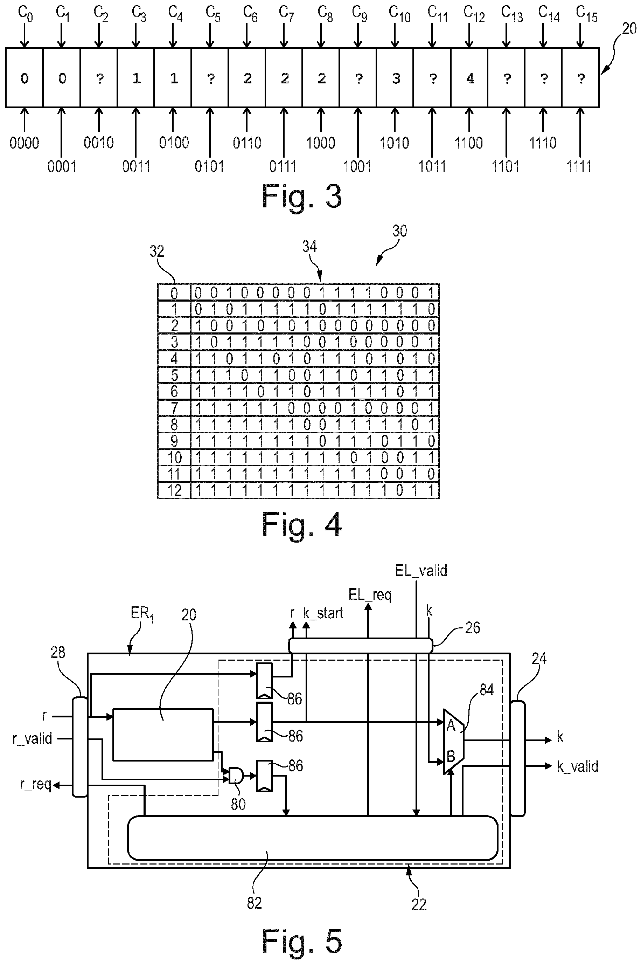

Par exemple, le générateur 12 déclenche la génération des $N_{lsb}$ bits de poids faible en réponse à la réception d'un signal r_req (Fig. 5). Par exemple, le générateur 12 transmet une première notification sous la forme d'un signal appelé « r_valid » (Fig. 5) quand il a fini de générer les $N_{msb}$ bits de poids fort du nombre aléatoire r puis une seconde notification r_valid quand il a fini de générer les $N_{lsb}$ bits de poids faible du nombre aléatoire r.

De tels générateurs sont connus et le générateur 12 n'est donc pas décrit ici plus en détail.

Le niveau 14 comprend $N_{ER}$ échantillonneurs rapides $ER_i$. L'indice i est un identifiant de l'échantillonneur rapide. L'indice i est ici un nombre entier compris entre 1 et $N_{ER}$. Le nombre $N_{ER}$ est supérieur ou égal à un et, de préférence, compris entre deux et dix ou entre deux et sept et encore plus avantageusement entre deux et cinq. Ici, le nombre $N_{ER}$ est choisi égal à cinq.

Dans ce mode de réalisation, les échantillonneurs rapides $ER_i$ sont identiques les uns aux autres. Par conséquent, seul l'échantillonneur $ER_1$ est décrit plus en détail.

L'échantillonneur $ER_1$ est capable, en réponse à la réception du nombre $r_{msb}$, de transmettre le seul échantillon k qui vérifie la condition (2) suivante :

- Condition (2) : Quel que soit le nombre $r_{lsb}$ appartenant à l'intervalle [0 ; $2^{Nr-Nmsb}-1$] la relation suivante est vérifiée : $F(k-1) < (r_{msb}, r_{lsb}) \le F(k)$, où :

    - F est la densité cumulative de probabilité de la loi $\rho$,
    - ($r_{msb}$, $r_{lsb}$) est le nombre binaire codé sur $N_r$ bits et dont les $N_{msb}$ bits de poids fort sont identiques aux $N_{msb}$ bits du nombre $r_{msb}$ et dont les $N_{lsb}$ bits de poids faible sont identiques aux $N_{lsb}$ bits du nombre $r_{lsb}$.

L'échantillonneur rapide $ER_1$ est aussi capable d'émettre un signal d'échec noté « EL_req » (Fig. 5) qui est transmis à un échantillonneur lent du niveau 16.

La condition (2) est considérée comme étant vérifiée seulement s'il existe un unique échantillon k pour lequel cette condition (2) est vérifiée.

Pour être en mesure de trouver rapidement l'échantillon k qui vérifie la condition (2) et, en alternance, émettre le signal EL_req, l'échantillonneur $ER_1$ comporte :

- une mémoire 18 contenant une table tronquée 20 préenregistrée, et
- un module 22 de recherche.

La table 20 associe à chaque nombre $r_{msb}$ qui vérifie la condition (2), l'échantillon k correspondant, c'est-à-dire l'unique échantillon k tel que $F(k-1) < (r_{msb}, r_{lsb}) \le F(k)$ et cela pour toutes les valeurs possibles du nombre $r_{lsb}$. En effet, il a été observé que pour certains nombres aléatoires r, il est possible de trouver l'échantillon k qui vérifie la condition (1) sans utiliser les $N_{lsb}$ bits de poids faible de ce nombre aléatoire r.

Dans ce mode de réalisation, la table 20 se présente sous la forme d'une table à une dimension contenant $2^{Nmsb}$ cellules $C_j$. Les $2^{Nmsb}$ cellules $C_j$ sont ordonnées par ordre croissant d'indice j, où j est un nombre entier compris entre 0 et $2^{Nmsb}-1$.

Chaque échantillon k pour lequel il existe un nombre $r_{msb}$ qui satisfait la condition (2) est enregistré dans la cellule dont l'indice j est égal à ce nombre $r_{msb}$.

La condition (2) est vérifiée pour une partie seulement des nombres $r_{msb}$ possibles. Par conséquent, la table 20 contient des cellules dans lesquelles aucun échantillon k n'est enregistré. L'indice j de ces cellules est égal au nombre $r_{msb}$ pour lequel la condition (2) n'est pas vérifiée. Dans ces cellules, la table 20 contient un symbole d'échec différent de tous les échantillons k possibles. Par exemple, ici, le symbole d'échec est le symbole « ? ».

La figure 3 illustre le contenu d'une table 20 dans un cas extrêmement simplifié où l'intervalle I contient seulement treize échantillons k numérotés de 0 à 12, chacun de ces échantillons k étant aussi associé à une probabilité F(k) correspondante par la table complète 30 de la figure 4.

La table 30 comporte, par exemple, une première colonne 32 contenant les échantillons k et une seconde colonne 34 contenant la probabilité F(k) correspondant à chaque échantillon k. Toutes les probabilités F(k) sont inférieures ou égales à un. Dans ces conditions, ici, la colonne 34 contient uniquement la valeur binaire de la partie décimale de la probabilité F(k). Cette valeur binaire a été calculée à partir de la loi p gaussienne discrète. Dans l'exemple représenté sur la figure 4, le nombre $N_F$ est égal à seize et les probabilités F(k) sont donc codées chacune sur seize bits.

Dans cet exemple simplifié, lorsque le nombre $r_{msb}$ est égal à "0000" (valeur binaire), la condition (2) est vérifiée seulement pour k = 0. Dans ces conditions, la valeur 0 est enregistrée dans la cellule $C_0$ de la table 20. De façon similaire, lorsque le nombre $r_{msb}$ est égal à "1010" (valeur binaire), la condition (2) est vérifiée seulement pour k = 3. Par conséquent, la valeur "3" est enregistrée dans la cellule $C_{10}$ ("10" en décimal est égal à "1010" en valeur binaire).

Par contre, lorsque le nombre $r_{msb}$ est égal à "0010" (valeur binaire), il n'existe pas d'échantillon k pour lequel, quelle que soit la valeur du nombre $r_{lsb}$, la condition (2) est satisfaite. En effet, la condition (2) est vérifiée pour k = 0 si le nombre $r_{lsb}$ est inférieur ou égal à F(0) et la condition (2) est vérifiée pour k = 1 si le nombre $r_{lsb}$ est strictement supérieur à F(0). Autrement dit, les quatre bits de poids fort d'un nombre aléatoire r commençant par « 0010 » ne sont pas suffisants pour identifier, sans ambiguïté, l'échantillon k correspondant. Dans ces conditions, le symbole « ? » est enregistré dans la cellule $C_2$.

Le module 22 de recherche est apte à recevoir le nombre $r_{msb}$ et, en réponse, à transmettre l'échantillon k correspondant et, en alternance, à émettre le signal d'échec EL_req. Pour cela, ici, le module 22 lit, dans la table 20, le contenu de la colonne $C_j$ dont l'indice j est égal au nombre $r_{msb}$ reçu. Si la cellule $C_j$ contient un échantillon k, le module 22 transmet l'échantillon k contenu dans cette cellule sur une interface 24 de sortie de l'échantillonneur $ER_1$. Si la cellule $C_j$ contient le symbole « ? », le module 22 émet le signal d'échec EL_req sur une interface 26 raccordée au niveau 16 d'échantillonnage lent.

Pour recevoir le nombre $r_{msb}$ généré par le générateur 12, l'échantillonneur $ER_1$ comporte aussi une interface 28 qui le raccorde au générateur 12. Ici, l'interface 28 permet d'acquérir le nombre aléatoire r complet et l'interface 26 permet aussi de communiquer ce nombre aléatoire r complet reçu à un échantillonneur lent du niveau 16.

Dans ce mode de réalisation, le niveau 16 d'échantillonnage lent comporte un seul échantillonneur lent 40. L'échantillonneur lent 40 est raccordé à l'interface 26 de chaque échantillonneur rapide $ER_i$. Il est ainsi apte à échanger des informations avec chacun de ces échantillonneurs rapides $ER_i$. En particulier, l'échantillonneur 40 est apte à recevoir le signal d'échec EL_req, un nombre aléatoire r complet généré par le générateur 12 et, en réponse, à transmettre l'échantillon k correspondant au nombre aléatoire reçu r vers l'échantillonneur rapide $ER_i$ qui lui a transmis le signal EL_req.

Pour déterminer l'échantillon k qui correspond au nombre aléatoire r reçu, l'échantillonneur lent 40 met en oeuvre un échantillonnage par inversion. À cet effet, il comporte :

- une mémoire 42 contenant une table complète 44 préenregistrée, et
- un module 46 de recherche.

La table 44 associe à chaque échantillon k de l'intervalle I la probabilité F(k) correspondante. La table 44 est structurellement identique à la table 30 précédemment décrite sauf qu'elle comporte beaucoup plus de lignes puisque dans un mode de réalisation concret, le nombre $2^{Nk}$ d'échantillons k est beaucoup grand que treize et habituellement supérieur à $2^{10}$ ou $2^{16}$ ou $2^{32}$.

Le module 46 de recherche est configuré pour sélectionner dans la table 44 le seul échantillon k pour lequel la condition (1) est vérifiée, c'est-à-dire la condition F(k-1) < r ≤ F(k), où r est le nombre aléatoire complet reçu. Par exemple, ici, le module 46 consulte les probabilités F(k) contenues dans la colonne 34 les unes après les autres et en les parcourant par ordre croissant. À chaque fois que le module 46 consulte une probabilité F(k), il la compare au nombre aléatoire r reçu. Si le nombre r est strictement supérieur à la probabilité F(k), il consulte la probabilité F(k+1) suivante. Si le nombre r est inférieur ou égal à la probabilité F(k), le module 46 transmet l'échantillon k associé par la table 44 à cette probabilité F(k).

La table 44 est beaucoup plus grande que la table 20 et la recherche de l'échantillon k dans cette table est plus complexe et plus longue que la recherche dans la table 20. Par conséquent, l'échantillonneur 40 met, en moyenne, plus de temps à émettre l'échantillon k que l'échantillonneur rapide $ER_1$. Par contre, quel que soit le nombre aléatoire r, l'échantillonneur lent 40 est capable de sélectionner l'échantillon k correspondant alors que ce n'est pas le cas pour l'échantillonneur rapide $ER_1$. Ainsi, selon que l'échantillonneur rapide fait appel ou non à l'échantillonneur lent 40 pour obtenir l'échantillon k, le temps qui s'écoule entre l'instant $t_d$ où l'échantillonneur rapide reçoit le nombre $r_{msb}$ et l'instant $t_e$ où l'échantillonneur rapide $ER_i$ émet sur son interface 24 de sortie l'échantillonneur k est très différent.

Par la suite, on suppose que le générateur 12 débute la génération d'un nombre aléatoire r à chaque début d'un intervalle d'échantillonnage. La durée $T_e$ de cet intervalle d'échantillonnage est supérieure ou égale au temps nécessaire pour qu'un échantillonneur rapide transmette l'échantillon k lorsqu'il trouve cet échantillon k dans sa table 20. Ici, la durée $T_e$ est également inférieure au temps nécessaire pour que l'échantillonneur 40 sélectionne et transmette l'échantillon k associé au nombre aléatoire complet r reçu. Ici, les intervalles d'échantillonnage se répètent périodiquement les uns après les autres à une fréquence prédéfinie $f_e$.

Dans ces conditions, à chaque fois que l'échantillonneur rapide $ER_i$ trouve un échantillon k associé, par la table 20, au nombre $r_{msb}$ reçu, il transmet cet échantillon k avant la fin de l'intervalle d'échantillonnage. Par contre, dans le cas inverse où l'échantillonneur rapide ne trouve pas lui-même l'échantillon k dans la table 20 et doit activer l'échantillonneur 40 pour obtenir cet échantillon k, l'échantillon k est transmis après la fin de l'intervalle d'échantillonnage. Ainsi, un échantillonneur rapide $ER_i$ utilisé seul est incapable de systématiquement émettre à chaque fin d'intervalle d'échantillonnage un nouvel échantillon k.

Pour accroître la régularité des instants d'émission des échantillons k, le dispositif 10 implémente et combine plusieurs solutions.

Tout d'abord, le dispositif 10 comporte un ensemble 50 de mémoire pour le stockage en avance d'échantillons k. Ici, l'ensemble 50 comporte une mémoire $MF_i$ pour chaque échantillonneur rapide $ER_i$. De préférence, ces mémoires $MF_i$ sont toutes identiques les unes aux autres. Ainsi, seule la mémoire $MF_1$ est décrite plus en détail.

La mémoire $MF_1$ comporte une entrée raccordée à l'interface 26 de sortie de l'échantillonneur $ER_1$ et une sortie raccordée à une entrée respective d'un multiplexeur 60. La mémoire $MF_1$ est une mémoire FIFO (« First In First Out »), c'est-à-dire une mémoire qui délivre en sortie les échantillons k dans le même ordre que celui où ces échantillons k ont été reçus et enregistrés. La mémoire $MF_1$ peut stocker au maximum $T_{MF}$ échantillons k. Typiquement, le nombre $T_{MF}$ est inférieur ou égal à 64 et, de préférence, inférieur ou égal à 16. Habituellement, le nombre $T_{MF}$ est aussi supérieur à deux ou quatre. Ici, le nombre $T_{MF}$ est égal à huit.

Cette mémoire $MF_1$ permet d'enregistrer, par avance, plusieurs échantillons k émis par l'échantillonneur $ER_1$.

Les nombres $a_l$ délivrés par le dispositif 10 sont extraits, à chaque fin d'intervalle d'échantillonnage, d'une des mémoires $MF_i$. Plus précisément, le multiplexeur 60 raccorde, en alternance et de façon cyclique, la sortie d'une mémoire $MF_i$ à une sortie 62 du dispositif 10 sur laquelle est délivré le nombre $a_l$. Ici, à chaque fin d'un intervalle d'échantillonnage, le multiplexeur 60 raccorde une nouvelle mémoire $MF_i$ à la sortie 62. Ici, le multiplexeur 60 raccorde chaque mémoire $MF_i$ les unes après les autres dans l'ordre de leur indice i à la sortie 62.

Si plusieurs échantillons k sont stockés dans la mémoire $MF_1$, même si au cours d'un intervalle d'échantillonnage, l'échantillonneur $ER_1$ est activé et qu'il doit avoir recours à l'échantillonneur 40 pour obtenir le nouvel échantillon k, il est quand même possible d'extraire de la mémoire $MF_1$, à la fin de l'intervalle d'échantillonnage, un nouvel échantillon k. Ainsi, la mémoire $MF_1$ permet déjà à elle seule d'améliorer la régularité avec laquelle les échantillons k sont transmis.

Le dispositif 10 comporte aussi un module 70 d'arbitrage. Le module 70 active au début de chaque intervalle d'échantillonnage un nouvel échantillonneur $ER_i$. Par exemple, le module 70 active les échantillonneurs $ER_i$ de façon cyclique. Ici, le module 70 active les échantillonneurs $ER_i$ les uns après les autres dans l'ordre de leurs indices i puis retourne à l'échantillonneur $ER_1$ après avoir activé l'échantillonneur $ER_5$.

À chaque fois qu'un échantillonneur $ER_i$ est activé, il acquiert un nombre aléatoire $r_{msb}$ généré par le générateur 12 puis exécute les différents traitements nécessaires pour obtenir et transmettre le nouvel échantillon k. Puisque les échantillonneurs $ER_i$ sont activés à tour de rôle, un échantillonneur $ER_i$ particulier dispose d'une durée égale à $5T_e$ après avoir été activé pour obtenir et émettre le nouvel échantillon k. Ainsi, même si l'échantillonneur $ER_i$ doit faire appel à l'échantillonneur lent 40 pour obtenir le nouvel échantillon k, la probabilité que le nouvel échantillon k soit émis avant la fin de la durée $5T_e$, et donc avant que le module 70 active à nouveau ce même échantillonneur $ER_i$, augmente.

Dès lors, réciproquement, la probabilité que la mémoire $MF_i$ se vide complètement diminue, et la probabilité que le dispositif 10 arrive à délivrer à chaque fin d'intervalle d'échantillonnage un nouvel échantillon k est dès lors plus importante.

La figure 5 représente plus en détail un mode de réalisation possible de l'échantillonneur $ER_1$. L'interface 28 reçoit les uns après les autres, en partant du bit de poids le plus fort et en allant vers le bit de poids le plus faible, les bits du nombre aléatoire r généré par le générateur 12. L'interface 28 permet aussi d'envoyer au générateur 12 la requête r_req pour déclencher la génération du nombre $r_{lsb}$.

L'interface 26 permet d'envoyer à l'échantillonneur 40, la requête EL_req, le nombre aléatoire complet r reçu et un indice k_start. L'indice k_start permet d'initialiser la recherche dans la table 44 à partir d'un échantillon k strictement supérieur à zéro. L'interface 26 permet aussi de recevoir l'échantillon k sélectionné par l'échantillonneur lent 40 et de le transmettre à une entrée B d'un multiplexeur 84. L'interface 26 reçoit aussi un signal EL_valid qui indique que la sélection du nouvel échantillon k par l'échantillonneur lent 40 est terminée.

L'interface 24 permet d'émettre le nouvel échantillon k obtenu et un signal k_valid vers la mémoire $MF_1$. Le signal k_valid indique que le nouvel échantillon k obtenu est prêt à être enregistré dans cette mémoire.

L'échantillonneur rapide $ER_1$ comporte une porte logique 80 qui, lorsque le premier signal r_valid est reçu, déclenche la lecture dans la table 20 du contenu de la cellule $C_j$ dont l'indice j est égal au nombre $r_{msb}$ reçu. Le contenu de la cellule $C_j$ est alors transmis vers une machine 82 à états finis et, en parallèle, vers une entrée A du multiplexeur 84.

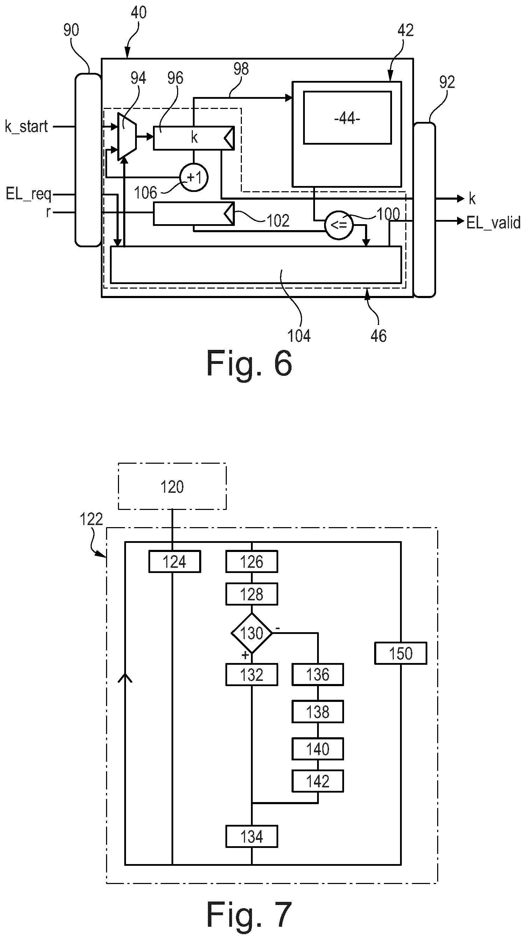

La machine 82 est configurée pour mettre en oeuvre le procédé de la figure 7.

L'échantillonneur $ER_1$ comporte aussi différentes bascules 86 pour gérer le cadencement des différents signaux émis et reçus.

La figure 6 représente un mode de réalisation possible de l'échantillonneur lent 40. L'échantillonneur lent 40 comporte une interface 90 d'entrée et une interface 92 de sortie. L'interface 90 permet de recevoir la requête EL_req, le nombre aléatoire complet r et l'indice k_start transmis par l'un quelconque des échantillonneurs rapides $ER_i$. L'interface 92 permet d'envoyer à l'échantillonneur $ER_i$ qui a émis la requête EL_req, le nouvel échantillon k sélectionné et le signal EL_valid.

L'échantillonneur lent 40 comporte un multiplexeur 94 qui reçoit sur une première entrée l'indice k_start et dont la sortie est raccordée à un registre 96 qui contient l'échantillon k à rechercher dans la table 44. Une sortie du registre 96 est aussi raccordée à l'interface 92 pour délivrer sur cette interface l'échantillon k sélectionné.

Dans ce mode de réalisation, l'échantillonneur lent 40 implémente une recherche linéaire dans la table 44 de l'échantillon k qui vérifie la condition (1). Dans ce cas, la table 44 est typiquement une table à une seule dimension contenant $2^{Nr}$ cellules $C_k$. Les $2^{Nr}$ cellules sont classées par ordre croissant d'indices échantillon k. Chaque cellule $C_k$ contient la probabilité F(k). Ainsi, dans ce mode de réalisation, l'échantillon k est aussi utilisé comme indice permettant de sélectionner directement la probabilité F(k) correspondante dans la table 44. À cet effet, le registre 96 délivre, sur un bus d'adresses 98 raccordé à la mémoire 42, l'échantillon k qu'il contient. En réponse, la mémoire 42 délivre sur une première entrée d'un comparateur 100, la probabilité F(k) contenue dans la cellule $C_k$ d'indice k.

La seconde entrée du comparateur 100 est raccordée à un registre 102 qui stocke le nombre aléatoire complet r reçu par l'intermédiaire de l'interface 90.

Une sortie du comparateur 100 est raccordée à une entrée d'une machine 104 à états finis.

L'échantillonneur lent 40 comporte aussi un additionneur 106 qui incrémente de un le contenu du registre 96. La sortie de l'additionneur 106 est raccordée à une seconde entrée du multiplexeur 94. Ainsi, en sélectionnant cette seconde entrée, il est possible de remplacer l'échantillon k actuellement contenu dans le registre 96 par l'échantillon k+1.

La machine 104 est configurée pour mettre en oeuvre le procédé de la figure 7. À cet effet, elle est notamment apte à déclencher l'incrémentation de l'échantillon k à chaque fois que le comparateur 100 indique que la probabilité F(k) sélectionnée est inférieure au contenu du registre 102. Lorsque, au contraire, le comparateur 100 indique que la probabilité F(k) sélectionnée est supérieure ou égale au contenu du registre 102, la machine 104 déclenche l'émission du signal EL_valid indiquant que l'échantillon k présent sur l'interface 92 est l'échantillon sélectionné qui vérifie la condition (1).

Le fonctionnement du dispositif 10 va maintenant être décrit en référence au procédé de la figure 7.

Lors d'une phase 120 d'initialisation du dispositif 10, la table 44 est construite. Plus précisément, les $2^{Nk}$ probabilités F(k) sont calculées à partir de la loi p de probabilité qui doit être implémentée par le dispositif 10. Typiquement, chaque probabilité F(k) est obtenue en approximant sa valeur réelle sur $N_r$ bits par arrondi. La table 44 ainsi construite est ensuite fournie et enregistrée dans la mémoire 42 de l'échantillonneur lent 40.

Lors de la phase 120, le nombre $N_{msb}$ est choisi, par exemple, de façon expérimentale. A titre d'illustration, pour cela, l'architecture du dispositif 10 est simulée sur un ordinateur pour différentes valeurs du nombre $N_{msb}$ possibles et la plus petite valeur du nombre $N_{msb}$ à partir de laquelle le temps mis pour générer dix millions d'échantillons k ne diminue plus de façon substantielle est retenue. Ici, lors de ces simulations, il est également possible de faire varier la taille de la mémoire $MF_i$. Ainsi, ces simulations permettent de tester et de déterminer à la fois le plus petit nombre $N_{msb}$ et le plus petit nombre $T_{MF}$ possible pour les mémoires $MF_i$ à partir desquelles le temps mis pour générer dix millions d'échantillons k ne diminue plus de façon substantielle.

Par exemple, dans le cas où le nombre $N_r$ est égal à 128, l'écart type $\sigma$ est égal à 3 et l'intervalle I est égal à [-12$\sigma$ ; +12$\sigma$], il a été déterminé que les nombres $N_{msb}$ et $T_{MF}$ doivent être choisis égaux à, respectivement, quatre et huit dans le cas où le niveau 14 comporte cinq échantillonneurs rapides $ER_i$.

À ce stade, il est souligné que selon le nombre d'échantillonneur $ER_i$ du niveau 14, les résultats ne sont pas nécessairement les mêmes. Par exemple, le tableau ci-dessous donne les valeurs optimales pour les nombre $N_{msb}$ et $T_{MF}$ en fonction du nombre échantillonneurs $ER_i$ dans le niveau 14.

[Tableau 1]

| Nombre d'échantillonneurs $ER_i$ | $N_{msb}$ | $T_{MF}$ (en nombre d'échantillons k) |
|:---:|:---:|:---:|
| 2 | 4 | 64 |
| 3 | 4 | 16 |
| 4 | 6 | 8 |
| 5 | 4 | 8 |
| 6 | 4 | 8 |
| 7 | 4 | 8 |

Il a ainsi été déterminé qu'il ne semble pas y avoir davantage significatif à utiliser plus de cinq échantillonneurs rapides dans le dispositif 10.

Une fois le nombre $N_{msb}$ choisi, la table 20 est construite à partir, par exemple de la table 44. Ensuite, la table 20 est fournie et enregistrée dans la mémoire 18 de chaque échantillonneur rapide $ER_i$.

À partir de ce moment, le dispositif 10 est apte à générer des échantillons k lors d'une phase 122 de fonctionnement.

Lors de la phase 122, à chaque début d'un intervalle d'échantillonnage, lors d'une étape 124, le générateur 12 débute la génération d'un nouveau nombre aléatoire r selon la loi uniforme. Ici, le générateur 12 génère les bits du nouveau nombre aléatoire r les uns après les autres en partant du bit de poids le plus fort. Les bits du nouveau nombre aléatoire r sont transférés au fur et à mesure de leur génération aux différents échantillonneurs $ER_i$. Lorsque les $N_{msb}$ bits de poids fort ont été générés, un premier signal r_valid est émis pour informer les échantillonneurs $ER_i$. La génération des $N_{lsb}$ bits suivants du nombre aléatoire r est alors suspendue. La génération des $N_{lsb}$ bits suivants du nombre aléatoire r est déclenchée uniquement si un signal r_req est reçu avant la fin de l'intervalle d'échantillonnage. Lorsque la génération des $N_{lsb}$ bits suivants du nombre aléatoire r est terminée, un second signal r_valid est émis pour informer les échantillonneurs $ER_i$ que tous les bits du nombre aléatoire r ont maintenant été générés.

En parallèle, lors d'une étape 126, le module 70 d'arbitrage active un nouvel échantillonneur rapide $ER_i$ au début de chaque intervalle d'échantillonnage pour traiter le nouveau nombre aléatoire r généré. Ici, le module 70 active de façon cyclique et les uns après les autres les différents échantillonneurs rapides $ER_i$.

Lorsqu'il est activé, lors d'une étape 128, l'échantillonneur $ER_i$ reçoit le nombre $r_{msb}$.

Lors d'une étape 130, dès qu'il a reçu tous les bits du nombre $r_{msb}$, le module 22 recherche ce nombre $r_{msb}$ dans la table 20. Ici, l'étape 130 est déclenchée par la réception du premier signal r_valid.

Si la recherche est fructueuse, c'est-à-dire que le nombre $r_{msb}$ reçu est associé à un échantillon k par la table 20 alors, lors d'une étape 132, l'échantillonneur rapide $ER_i$ transmet cet échantillon k à la mémoire $MF_i$ qui l'enregistre. Pour cela, par exemple, la machine 82 commande le multiplexeur 84 pour sélectionner l'entrée A, et en parallèle, déclenche l'émission du signal k_valid.

En réponse à la réception du signal k_valid, lors d'une étape 134, la mémoire $MF_i$ enregistre l'échantillon k présent sur l'interface 24. Dans ce cas, un nouvel échantillon k est enregistré dans la mémoire $MF_i$ avant la fin de l'intervalle d'échantillonnage. De plus, dans ce cas, l'échantillonneur rapide $ER_i$ n'émet pas le signal r_req, ce qui inhibe la génération des $N_{lsb}$ bits suivants du nombre aléatoire r par le générateur 12.

Si la recherche est infructueuse, c'est-à-dire que le nombre $r_{msb}$ reçu est associé au symbole d'échec « ? » par la table 20, alors, lors d'une étape 136, l'échantillonneur rapide $ER_i$ émet le signal r_req pour déclencher la génération, par le générateur 12, des $N_{lsb}$ bits suivants du nombre aléatoire r.

Lorsque la totalité des bits du nouveau nombre aléatoire r ont été générés et reçus, l'échantillonneur rapide $ER_i$ émet le signal d'échantillonnage EL_req sur son interface 26. En même temps, le nombre aléatoire r complet et l'indice k_start sont mis à la disposition de l'échantillonneur lent 40 sur cette même interface 26. Ici, ceci est déclenché par la réception du second signal r_valid. L'indice k_start est pris égal au premier échantillon k qui précède le symbole « ? » associé au nombre $r_{msb}$ reçu dans la table 20.

Lors d'une étape 138, l'échantillonneur lent 40 reçoit ce nombre aléatoire r, la requête EL_req et l'indice k_start.

En réponse, l'échantillonneur 40 déclenche une étape 140 d'échantillonnage lent. Lors de cette étape 140, l'échantillonneur 40 enregistre l'indice k_start dans le registre 96 et le nombre r reçu dans le registre 102. Cela déclenche la lecture dans la table 44 de la probabilité F(k). La probabilité F(k) est comparée au nombre r contenu dans le registre 102 par le comparateur 100. Si le nombre r est inférieur ou égal à cette probabilité F(k) lue dans la table 44, la machine 104 génère le signal k_valid.

Si le nombre r est supérieur à la probabilité F(k) lue dans la table 44, la machine 104 incrémente de un le contenu du registre 96. Ainsi, le contenu du registre 96 est incrémenté de un en un jusqu'à ce que la probabilité F(k) lue dans la table 44 soit supérieure ou égale au nombre r contenu dans le registre 102. L'échantillon k contenu dans le registre 96 est en permanence présent sur l'interface 92 de sortie.

En réponse à la réception du signal EL_valid, lors d'une étape 142, la machine 82 de l'échantillonneur rapide $ER_i$ transmet, sur son interface 24, l'échantillon k sélectionné par l'échantillonneur lent 40 et émet le signal k_valid.

Ensuite, le procédé se poursuit par l'étape 134 d'enregistrement de ce nouvel échantillon k dans la mémoire $MF_i$.

Dans ce dernier cas, le nouvel échantillon k n'est pas présent sur l'interface 24 avant la fin de l'intervalle d'échantillonnage mais, généralement, avant la fin de la période $5T_e$ et donc avant que le module 70 active à nouveau ce même échantillonneur rapide $ER_i$.

Dans le cas où le nouvel échantillon k n'est pas encore présent à la fin de la période $5T_e$, le module 70, par exemple, attend que ce nouvel échantillon k soit présent sur l'interface 24 puis procède à l'étape 134 puis réactive immédiatement cet échantillonneur $ER_i$ pour traiter un nouveau nombre aléatoire r. Dans ce cas, le nombre d'échantillons k contenus dans la mémoire $MF_i$ diminue.

En effet, en parallèle des étapes 126 à 134, lors d'une étape 150, à chaque fin d'intervalle d'échantillonnage, le multiplexeur 60 sélectionne la mémoire $MF_i$ pour délivrer, en tant que nombre $a_i$ sur la sortie 62, le plus ancien des échantillons enregistré dans cette mémoire $MF_i$. Ainsi, le multiplexeur 60 sélectionne de façon cyclique les unes après les autres les mémoires $MF_i$. Dans le cas où la mémoire $MF_i$ sélectionnée est vide, le multiplexeur 60 attend que l'échantillonneur $ER_i$ ait fini de générer le nouvel échantillon k puis le transmettre immédiatement sur la sortie 62. Ainsi, le dispositif 10 est incapable de délivrer avant la fin de l'intervalle d'échantillonnage un nouvel échantillon k sur sa sortie 62 seulement si :

- la mémoire $MF_i$ sélectionnée par le multiplexeur 60 est vide, et
- l'échantillonneur $ER_i$ activé a recours à l'échantillonneur lent 40 pour générer le nouvel échantillon k.

Chapitre III : Variantes

III.1 - Variantes de l'échantillonneur lent

Dans un mode de réalisation simplifié, l'indice k_start n'est pas mis en oeuvre. Dans ce cas, la recherche dans la table 44 débute par exemple systématiquement avec l'échantillon k = 0.

L'échantillonneur lent peut mettre en oeuvre d'autres méthodes de recherche de l'échantillon k dans la table 44 qu'une recherche linéaire telle que celle précédemment décrite. Par exemple l'échantillonneur 40 peut, à la place, implémenter une recherche par dichotomie ou une recherche dans laquelle il parcourt les probabilités F(k) par ordre décroissant ou encore une recherche dans laquelle les probabilités F(k) sont consultées et sélectionnées de façon aléatoire jusqu'à trouver un échantillon k correct.

Le niveau 16 peut aussi comporter plusieurs échantillonneurs lents. Dans ce cas, par exemple, les échantillonneurs lents sont activés les uns après les autres. Par exemple, en réponse à un premier signal d'échec émis par un premier échantillonneur rapide, le premier échantillonneur lent est activé pour traiter ce premier signal d'échec. Si un second signal d'échec est émis avant que le premier échantillonneur lent ait fini ses traitements, un second échantillonneur lent est activé pour générer le nouvel échantillon k en réponse à ce second signal d'échec et ainsi de suite. Dans un autre mode de réalisation, chaque échantillonneur lent est associé à un groupe respectif d'un ou plusieurs échantillonneurs rapides et traite uniquement les signaux d'échec émis par les échantillonneurs rapides de ce groupe. Dans un cas particulier, il peut y avoir autant d'échantillonneurs lents que d'échantillonneurs rapides. Dans ce dernier cas, chaque échantillonneur lent est, par exemple, associé à son propre échantillonneur rapide.

III.2 . Variantes de l'échantillonneur rapide

En variante, le dispositif 10 comporte autant de générateurs de nombres aléatoires r que d'échantillonneurs rapides ou alors un générateur de nombres aléatoires r capables de générer, pendant chaque intervalle d'échantillonnage, autant de nombres aléatoires r qu'il y a d'échantillonneurs rapides $ER_i$. Dans ce cas, tous les échantillonneurs rapides peuvent être activés simultanément et en parallèle. Cela permet d'augmenter le nombre d'échantillons k générés à chaque intervalle d'échantillonnage et donc de remplir plus rapidement les mémoires $MF_i$.

Dans un mode de réalisation simplifié, le dispositif comporte un seul échantillonneur rapide $ER_1$. Dans ce cas, le module 70 d'arbitrage est omis. Cet unique échantillonneur rapide $ER_1$ peut quand même remplir en avance la mémoire $MF_1$. Par exemple, cet unique échantillonneur rapide $ER_1$ remplit la mémoire $MF_1$ pendant les intervalles de temps où il n'est pas nécessaire de fournir des nombres aléatoires $a_l$ à un logiciel tiers.

Au lieu d'avoir seulement un premier niveau d'échantillonneurs rapides comme le niveau 14, le dispositif 10 peut comporter, en variante, un niveau intermédiaire d'échantillonneurs rapides avant le niveau 16. Le niveau intermédiaire est un groupe d'un ou plusieurs échantillonneurs rapides supplémentaires. Les échantillonneurs rapides du niveau intermédiaire sont, par exemple, identiques aux échantillonneurs rapides du niveau 14, sauf que la table tronquée 20 est remplacée par une table tronquée dans laquelle le nombre aléatoire $r_{msb}$ est codé sur $(N_{msb}+N_{sb2})$ bits, où $N_{sb2}$ est un nombre de bits supérieur ou égal à un et inférieur à $(N_r - N_{msb})$. Le fonctionnement du dispositif de génération de nombres aléatoires dans le cas où il y a un niveau intermédiaire d'échantillonneurs rapides est par exemple le suivant. Le signal d'échec émis par un échantillonneur rapide du niveau 14 est reçu par un échantillonneur rapide du niveau intermédiaire. Cet échantillonneur rapide du niveau intermédiaire reçoit aussi le nombre $r_{msb}$ et les $N_{sb2}$ bits suivants du nombre aléatoire r généré par le générateur 12. La concaténation du nombre $r_{msb}$ et des $N_{sb2}$ bits suivants forme un nombre aléatoire tronqué $r_{msb2}$. L'échantillonneur rapide du niveau intermédiaire recherche dans sa table tronquée le nombre $r_{msb2}$. S'il trouve le nombre $r_{msb2}$, il transmet l'échantillon k associé, par sa table tronqué, à ce nombre $r_{msb2}$. Dans le cas contraire, il émet un signal d'échec qui est reçu et traité par l'échantillonneur lent 40. Selon le même principe, il est possible de concevoir un dispositif de génération de nombres aléatoires qui comporte plusieurs niveaux intermédiaires.

En variante, tous les échantillonneurs rapides $ER_i$ du niveau 14 ne sont pas identiques les uns aux autres. Par exemple, ils diffèrent les uns des autres par leur table 20. Par exemple, les différentes tables 20 ne comportent pas toutes le même nombre de cellules.

D'autres modes de réalisation de la table 20 sont possibles. En variante, la table 20 comporte deux colonnes. La première colonne contient uniquement les nombres $r_{msb}$ associés à un échantillon k. La deuxième colonne contient l'échantillon k associé au nombre $r_{msb}$. Dans ce cas, à chaque fois qu'un nombre $r_{msb}$ est reçu par le module 22 de recherche, ce module 22 compare ce nombre $r_{msb}$ reçu aux différents nombres $r_{msb}$ contenus dans la première colonne de la table 20. Si le nombre $r_{msb}$ reçu est égal à l'un des nombres $r_{msb}$ de la première colonne, l'échantillon 4 associé à ce nombre $r_{msb}$ est sélectionné. Pour cela, le module 22 de recherche comporte un ou plusieurs comparateurs aptes à travailler en parallèle. Chaque comparateur est configuré pour comparer la valeur du nombre $r_{msb}$ reçu à un nombre $r_{msb}$ prédéterminé contenu dans la première colonne de la table 20. Par exemple, le module de recherche comporte autant de comparateurs que de nombres $r_{msb}$ contenus dans la première colonne de la table 20. Dans ce dernier cas, le module 22 est aussi capable de trouver, en un seul intervalle d'échantillonnage, le nombre $r_{msb}$ reçu dans cette table 20. Dans le cas où aucun nombre $r_{msb}$ de la première colonne ne correspond au nombre $r_{msb}$ reçu, l'échantillonneur génère le signal d'échec.

Dans un mode de réalisation particulier, la table 20 ne comporte qu'une partie des nombres $r_{msb}$ pour lesquels la condition (2) est vérifiée. Par exemple, la

table 20 comporte seulement les nombres $r_{msb}$ associés aux échantillons k qui apparaissent les plus fréquemment. Ainsi, dans le cas où la loi p est une loi gaussienne, la table 20 contient, par exemple, que les nombres $r_{msb}$ inférieurs à un seuil $S_1$ prédéterminé, où le seuil $S_1$ est inférieur ou égal au plus grand nombre $r_{msb}$ qui vérifie la condition (2). Cela permet de diminuer la taille de la table 20 sans augmenter de façon proportionnelle le nombre de fois où l'échantillonneur lent est activé.

D'autres symboles que le symbole « ? » peuvent être utilisés comme symbole d'échec. Par exemple, le symbole d'échec peut aussi être simplement une cellule vide.

Chapitre III.3 : Autres variantes :

En variante, à chaque intervalle d'échantillonnage, le générateur génère la totalité des $N_r$ bits du nouveau nombre aléatoire r et cela même si l'échantillonneur rapide est capable de fournir le nouvel échantillon k sans avoir recours à la table 44. Dans ce cas, la génération des $N_{lsb}$ bits suivants du nombre aléatoire r n'est jamais inhibée.

En variante, le dispositif 10 peut être entièrement implémenté sous la forme d'un logiciel exécutable par un microprocesseur programmable d'un ordinateur.

Dans un autre mode de réalisation, une seule mémoire $MF_c$ est commune à plusieurs échantillonneurs rapides. Dans ce cas, ce groupe de plusieurs échantillonneurs rapides enregistrent chacun les échantillons k qu'ils transmettent dans la même mémoire $MF_c$. Dans un cas particulier, le dispositif 10 comporte une seule mémoire $MF_c$ commune à l'ensemble des échantillonneurs rapides du niveau 14. Dans une variante simplifiée, toutes les mémoires $MF_i$ sont omises.

La loi p n'est pas nécessairement une loi gaussienne. Ce qui a été décrit et enseigné ici s'applique à toute loi de probabilité non-uniforme discrète et bornée. Par exemple, en variante, la loi p est une loi binomiale de probabilité ou une loi géométrique de probabilité ou une loi de poisson. Dans ce cas, c'est donc la densité cumulative de probabilité F qui doit être adaptée en fonction de cette nouvelle loi p.

En variante, le dispositif 10 peut comporter une table de conversion qui associe à chaque numéro d'ordre d'un échantillon k une valeur numérique correspondante dans l'intervalle I. Dans ce cas, la valeur de l'échantillon k n'est pas directement égale à son numéro d'ordre mais à la valeur associée à ce numéro d'ordre par cette table de conversion. Dans la table de convention, les valeurs numériques sont classées par ordre croissant et espacées les unes des autres par un intervalle régulier.

En variante, dans le cas où la loi p est symétrique par rapport à l'échantillon k = 0, au lieu d'utiliser la loi $\rho$, c'est la loi $\rho'$ positive correspondante qui est utilisée. Dans ce cas, les échantillonneurs rapides et lent tels que précédemment décrits génèrent un échantillon k'. Ensuite, l'échantillon k' est converti en un échantillon k comme décrit dans le chapitre I, c'est-à-dire en tirant un bit aléatoire b selon une loi uniforme puis en multipliant l'échantillon k' par +1 ou -1 selon la valeur de ce bit aléatoire tiré.

Chapitre IV : Avantages des modes de réalisation décrits.

Il a été observé que pour des nombres aléatoires r particuliers générés par le générateur 12, il est possible d'identifier l'échantillon k correspondant pour lequel la condition (1) est vérifiée en utilisant seulement les $N_{msb}$ bits de poids fors de ce nombre aléatoire. La table 20 contient seulement les informations nécessaires pour associer certains ou tous ces nombres aléatoires particuliers $r_{msb}$ à l'échantillon k correspondant. La table 20 contient donc beaucoup moins de cellules que la table 44. La table 20 est donc beaucoup plus petite que la table 44 et la recherche de l'échantillon k dans cette table 20 est beaucoup plus rapide que la recherche de l'échantillon k dans la table 44. Ainsi, lorsque le nombre aléatoire r généré par le générateur 12 est l'un de ces nombres aléatoires particuliers, l'échantillonneur rapide est capable d'émettre le nouvel échantillon k beaucoup plus rapidement que si l'échantillonneur lent était utilisé pour faire le même travail. Le recours à l'échantillonneur lent pour obtenir l'échantillon k lorsque l'échantillonneur rapide échoue, permet malgré l'utilisation de l'échantillonneur rapide et de la table 20, d'émettre le nouvel échantillon k systématiquement et pour tous les nombres aléatoires r générés par le générateur 12.

Le fait d'utiliser un échantillonneur rapide en plus de l'échantillonneur lent permet, sans s'écarter de la loi p choisie, d'accroître le débit d'échantillons k et donc de diminuer la latence d'échantillonnage.

Le fait d'utiliser plusieurs échantillonneurs rapides qui sont activés à tour de rôle au début de chaque intervalle d'échantillonnage permet d'augmenter la probabilité que le dispositif 10 délivre un nouvel échantillon k à l'issue d'un seul intervalle d'échantillonnage. De plus, puisque l'échantillonneur lent travaille alors en parallèle d'un ou plusieurs échantillonneurs rapides, cela permet aussi d'émettre un échantillon k même si l'échantillonneur lent n'a pas fini tous ses traitements. Ainsi, l'utilisation de plusieurs échantillonneurs rapides en parallèle de l'échantillonneur lent permet d'accroître encore plus le débit d'échantillons k.

Le fait d'utiliser un seul échantillonneur lent commun à plusieurs échantillonneurs rapides décroît l'encombrement du dispositif 10 sans pour autant diminuer substantiellement le débit d'échantillons k.

L'utilisation d'une mémoire FIFO permet de stocker à l'avance plusieurs échantillons k dans cette mémoire puis de délivrer ces échantillons k à chaque fin d'intervalle d'échantillonnage et cela indépendamment du fait qu'il soit nécessaire d'activer l'échantillonneur lent pour obtenir le nouvel échantillon k. Cela permet donc d'augmenter la régularité à laquelle sont délivrés les échantillons k. Le fait d'augmenter la régularité renforce la robustesse du dispositif 10 vis-à-vis des attaques par analyse temporelle. En effet, le débit d'échantillon k sur la sortie 62 ne dépend plus alors nécessairement de l'activation ou non de l'échantillonneur lent.

Le fait que le nombre $N_{msb}$ soit au moins cinq fois plus petit que le nombre $N_r$ permet d'obtenir une table 20 très petite et donc un échantillonneur $ER_i$ beaucoup plus rapide que l'échantillonneur lent. Cela contribue donc à accroître encore plus le débit d'échantillons k.

Le fait que le nombre $N_r$ soit au moins deux fois supérieur au nombre $N_k$ permet d'obtenir un écart entre la loi p discrète et bornée et sa version continue très faible.

Le fait d'inhiber la génération des $N_{lsb}$ bits de poids faibles du nombre aléatoire r à chaque fois que l'échantillonneur rapide arrive à transmettre un nouvel échantillon k en utilisant uniquement la table 20, limite la consommation d'énergie du dispositif 10.

Le fait d'enregistrer l'échantillon k dans une cellule dont l'indice est égal au nombre $r_{msb}$ qui vérifie la condition (2) et, dans les autres cellules, un symbole d'échec, permet, en exécutant une seule opération de lecture, de trouver, s'il existe, l'échantillon k correspondant au nombre $r_{msb}$ reçu. Dans ces conditions, la recherche dans la table 20 est très rapide. Cela permet d'accroître encore plus le débit d'échantillons k.

**Revendications**

1. Dispositif de génération d'un nombre aléatoire, ce nombre aléatoire étant codé sur $N_k$ bits et tiré selon une loi p de probabilité non-uniforme discrète et bornée, ce dispositif comportant :

    - un générateur (12) de nombres aléatoires codés sur $N_r$ bits et tirés selon une loi uniforme, le nombre $N_r$ étant un nombre entier positif supérieur ou égal au nombre $N_k$,
    - un échantillonneur lent (40) comportant :

        • une table (44) complète associant à chaque probabilité possible F(k) de la densité cumulative de probabilité F de la loi $\rho$, l'échantillon k correspondant codé sur $N_k$ bits, chaque probabilité F(k) étant codée sur $N_F$ bits, le nombre $N_F$ étant supérieur au nombre $N_k$ et inférieur ou égal au nombre $N_r$,
        • un premier module (46) de recherche apte :

            - à recevoir les $N_r$ bits d'un nombre aléatoire r généré par le générateur,
            - en réponse, à sélectionner dans la table complète, la seule probabilité F(k) telle que $F(k-1) < r \leq F(k)$, puis
            - à transmettre l'échantillon k, associé par la table complète à la probabilité F(k) sélectionnée, en tant que nombre aléatoire tiré selon la loi $\rho$,

    - un échantillonneur rapide ($ER_i$) comportant :

        • une table tronquée (20), plus petite que la table complète, associant à des nombres aléatoires tronqués $r_{msb}$, codés seulement sur $N_{msb}$ bits, le seule échantillon k pour lequel, quel que soit le nombre $r_{lsb}$ appartenant à l'intervalle $[0; 2^{Nr-Nmsb}-1]$, la condition suivante est vérifiée : $F(k-1) < (r_{msb}, r_{lsb}) \leq F(k)$, où : - $(r_{msb}, r_{lsb})$ est le nombre binaire codé sur $N_r$ bits et dont les $N_{msb}$ bits de poids forts sont égaux aux $N_{msb}$ bits du nombre aléatoire tronqué $r_{msb}$ et dont les $(N_r-N_{msb})$ bits de poids faibles sont égaux aux $(N_r-N_{msb})$ bits du nombre $r_{lsb}$, - $N_{msb}$ est un nombre entier positif inférieur à $N_r$,
        • un second module (22) de recherche apte :

- à acquérir les $N_{msb}$ bits de poids forts d'un nombre aléatoire r généré par le générateur, ces $N_{msb}$ bits formant un nombre aléatoire tronqué $r_{msb}$ reçu,
- en réponse, à rechercher le nombre aléatoire tronqué $r_{msb}$ reçu dans la table tronquée (20), et
- si la recherche est fructueuse, à transmettre l'échantillon k, associé, par la table tronquée, au nombre aléatoire tronqué $r_{msb}$ reçu, en tant que nombre aléatoire tiré selon la loi p et, en alternance, si la recherche est infructueuse, à émettre un signal d'échec, et

- l'échantillonneur lent (40) est apte à :

• recevoir le signal d'échec et le nombre aléatoire r généré par le générateur et dont les $N_{msb}$ bits de poids forts sont égaux au nombre aléatoire tronqué $r_{msb}$ qui a conduit à l'émission de ce signal d'échec, puis
• en réponse, à sélectionner, à l'aide de la table complète (44), et à transmettre le seul échantillon k qui vérifie la condition $F(k-1) < r \leq F(k)$ et qui n'a pas pu être transmis par l'échantillonneur rapide,

- le générateur (12) est apte à générer un nouveau nombre aléatoire r au début de chaque intervalle d'échantillonnage, ces intervalles d'échantillonnage étant répétés périodiquement,

**caractérisé en ce que** le dispositif comporte :

• plusieurs échantillonneurs rapides ($ER_i$) aptes chacun à travailler en parallèle des autres échantillonneurs rapides et en parallèle de l'échantillonneur lent, et
• un module (70) d'arbitrage apte à activer, à chaque nouvel intervalle d'échantillonnage, un nouvel échantillonneur rapide, différent de l'échantillonneur rapide activé lors du précédent intervalle d'échantillonnage, pour traiter les $N_{msb}$ bits du nombre aléatoire r généré au début de ce nouvel intervalle d'échantillonnage, avec ce nouvel échantillonneur rapide activé.

2. Dispositif selon la revendication 1, dans lequel l'échantillonneur lent (40) est apte, pour chacun des échantillonneurs rapides, à recevoir :

- le signal d'échec généré par cet échantillonneur rapide, et
- le nombre aléatoire r qui a conduit à la génération de ce signal d'échec.

3. Dispositif selon l'une quelconque des revendications précédentes, dans lequel :

- le dispositif comporte une mémoire ($MF_i$) apte :

• à recevoir et à enregistrer chaque échantillon k transmis, et
• à délivrer en sortie du dispositif, à la fin de chaque intervalle d'échantillonnage et tant qu'il existe des échantillons k enregistrés dans cette mémoire, l'échantillon k enregistré le plus ancien.

4. Dispositif selon la revendication 3, dans lequel :

- le nombre d'échantillonneurs rapides ($ER_i$) est compris entre trois et cinq,
- la taille de la mémoire permet d'enregistrer au maximum $T_{MF}$ échantillons k, où le nombre $T_{MF}$ est compris entre huit et seize, et
- le nombre $N_{msb}$ est compris entre quatre et six.

5. Dispositif selon l'une quelconque des revendications précédentes, dans lequel le nombre $N_{msb}$ est cinq fois plus petit que le nombre $N_r$.

6. Dispositif selon l'une quelconque des revendications précédentes, dans lequel le nombre $N_r$ est un nombre entier positif au moins deux ou quatre fois supérieur au nombre $N_k$.

7. Dispositif selon l'une quelconque des revendications précédentes, dans lequel le générateur (12) est apte à générer d'abord les $N_{msb}$ bits du nombre aléatoire r et, l'échantillonneur rapide est apte à inhiber la génération, par le générateur (12), des $(N_r-N_{msb})$ bits suivant du nombre aléatoire r à chaque fois que la recherche dans la table tronquée (20) est fructueuse.

**8.** Dispositif selon l'une quelconque des revendications précédentes, dans lequel :

- la table tronquée (20) contient $2^{N_{msb} - s}$ cellules ordonnées par ordre d'indice croissant, où s est un nombre entier positif ou nul inférieur à $N_{msb}$, chaque échantillon k associé par la table tronquée à un nombre aléatoire $r_{msb}$ compris entre 0 et $2^{N_{msb} - s} - 1$ est enregistré dans la cellule dont l'indice est égal à ce nombre aléatoire tronqué $r_{msb}$, les autres cellules qui ne contiennent pas d'échantillon k contiennent un symbole d'échec différent de tous les échantillons k, et
- le second module (22) de recherche est apte à lire directement le contenu de la cellule dans la table tronquée dont l'indice est égal au nombre aléatoire tronqué $r_{msb}$ reçu recherché dans cette table tronquée et lorsque le contenu lu est un échantillon k, à transmettre cet échantillon k et lorsque le contenu lu est le symbole d'échec à émettre le signal d'échec.

**9.** Dispositif selon l'une quelconque des revendications précédentes, dans lequel la loi p est une loi de probabilité gaussienne discrète et bornée.

**10.** Procédé de génération d'un nombre aléatoire, ce nombre aléatoire étant codé sur $N_k$ bits et tiré selon une loi p de probabilité non-uniforme discrète et bornée, ce procédé comportant :

- une étape (120) de fourniture d'une table complète associant à chaque probabilité possible F(k) de la densité cumulative de probabilité F de la loi $\rho$, l'échantillon k correspondant codé sur $N_k$ bits, chaque probabilité F(k) étant codée sur $N_F$ bits, le nombre $N_F$ étant supérieur au nombre $N_k$ et inférieur ou égal à un nombre $N_r$,
- une étape (124) de génération de nombres aléatoires codés chacun sur $N_r$ bits et tirés selon une loi uniforme, le nombre $N_r$ étant un nombre entier positif supérieur ou égal au nombre $N_k$, cette étape de génération comportant la génération d'un nouveau nombre aléatoire r au début de chaque intervalle d'échantillonnage, ces intervalles d'échantillonnage étant répétés périodiquement,
- une étape (140) d'échantillonnage lent, cette étape comportant :

  • la réception des $N_r$ bits d'un nombre aléatoire r généré par le générateur,
  • en réponse, la sélection dans la table complète, de la seule probabilité F(k) telle que F(k-1) < r ≤ F(k), puis
  • la transmission de l'échantillon k, associé par la table complète à la probabilité F(k) sélectionnée, en tant que nombre aléatoire tiré selon la loi $\rho$,

- la fourniture (120) d'une table tronquée, plus petite que la table complète, associant à des nombres aléatoires tronqués $r_{msb}$, codés seulement sur $N_{msb}$ bits, le seul échantillon k pour lequel, quel que soit le nombre $r_{lsb}$ appartenant à l'intervalle $[0; 2^{N_r - N_{msb}} - 1]$, la condition suivante est vérifiée : F(k-1) < $(r_{msb}, r_{lsb})$ ≤ F(k), où :

  - $(r_{msb}, r_{lsb})$ est le nombre binaire codé sur $N_r$ bits et dont les $N_{msb}$ bits de poids forts sont égaux aux $N_{msb}$ bits du nombre aléatoire tronqué $r_{msb}$ et dont les $(N_r - N_{msb})$ bits de poids faibles sont égaux aux $(N_r - N_{msb})$ bits du nombre $r_{lsb}$,
  - $N_{msb}$ est un nombre entier positif inférieur à $N_r$,

- une étape d'échantillonnage rapide comportant :

  • la réception (128) des $N_{msb}$ bits de poids forts d'un nombre aléatoire r généré par le générateur, ces $N_{msb}$ bits formant un nombre aléatoire tronqué $r_{msb}$ reçu,
  • en réponse, la recherche (130) de ce nombre aléatoire tronqué $r_{msb}$ reçu dans la table tronquée, et
  • si la recherche est fructueuse, la transmission (132) de l'échantillon k, associé, par la table tronquée, au nombre aléatoire tronqué $r_{msb}$ reçu, en tant que nombre aléatoire tiré selon la loi p et, en alternance, si la recherche est infructueuse, l'émission d'un signal d'échec, puis

- en réponse à la réception du signal d'échec et du nombre aléatoire r généré par le générateur et dont les $N_{msb}$ bits de poids forts sont égaux au nombre aléatoire tronqué $r_{msb}$ qui a conduit à l'émission de ce signal d'échec, le déclenchement de l'exécution de l'étape (140) d'échantillonnage lent pour sélectionner, à l'aide de la table complète, et transmettre le seul échantillon k qui vérifie la condition F(k-1) < r ≤ F(k) et qui n'a pas pu être transmis à l'issue de la phase d'échantillonnage rapide, **caractérisé en ce que** le procédé comporte :
- la fourniture de plusieurs échantillonneurs rapides ($ER_i$) aptes chacun à travailler en parallèle des autres échantillonneurs rapides et en parallèle de l'échantillonneur lent, et
- l'activation, à chaque nouvel intervalle d'échantillonnage, d'un nouvel échantillonneur rapide, différent de l'échantillonneur rapide activé lors du précédent intervalle d'échantillonnage, pour traiter les $N_{msb}$ bits du nombre aléatoire r généré au début de ce nouvel intervalle d'échantillonnage, avec ce nouvel échantillonneur rapide activé.

11. Support d'enregistrement d'informations, lisible par un microprocesseur, **caractérisé en ce qu'**il comporte des instructions pour l'exécution d'un procédé conforme à la revendication 10, lorsque ces instructions sont exécutées par le microprocesseur.

**Patentansprüche**

1. Vorrichtung zur Erzeugung einer Zufallszahl, wobei diese Zufallszahl über $N_k$ Bits codiert ist und nach einem diskreten und beschränkten uneinheitlichen Wahrscheinlichkeitsgesetz $\rho$ gezogen wird, wobei diese Vorrichtung umfasst:

- eine Erzeugungseinheit (12) für Zufallszahlen, die über $N_r$ Bits codiert sind und nach einem einheitlichen Gesetz gezogen werden, wobei die Anzahl $N_r$ eine positive Ganzzahl größer oder gleich der Anzahl $N_k$ ist,
- eine langsame Abtasteinheit (40), die umfasst:

   • eine vollständige Tabelle (44), die jeder möglichen Wahrscheinlichkeit F(k) der kumulativen Dichte der Wahrscheinlichkeit F des Gesetzes $\rho$ die entsprechende über $N_k$ Bits codierte Abtastung k zuordnet, wobei jede Wahrscheinlichkeit F(k) über $N_F$ Bits codiert ist und die Anzahl $N_F$ größer als die Anzahl $N_k$ und kleiner oder gleich der Anzahl $N_r$ ist,
   • ein erstes Suchmodul (46), das zu Folgendem fähig ist:

      - Empfangen der $N_r$ Bits einer von der Erzeugungseinheit erzeugten Zufallszahl r,
      - als Antwort Auswählen der einzigen Wahrscheinlichkeit F(k) wie F(k-1) < r $\leq$ F(k) aus der vollständigen Tabelle, dann
      - Übermitteln der Abtastung k, die durch die vollständige Tabelle der ausgewählten Wahrscheinlichkeit F(k) zugeordnet ist, als Zufallszahl, die nach dem Gesetz $\rho$ gezogen wurde,

- eine schnelle Abtasteinheit ($ER_i$), die umfasst:

   • eine gekürzte Tabelle (20), die kleiner ist als die vollständige Tabelle und gekürzten Zufallszahlen $r_{msb}$, die nur über $N_{msb}$ Bits codiert sind, die einzige Abtastung k zuordnet, für die unabhängig von der Zahl $r_{lsb}$, die zum Intervall [0; $2^{Nr-Nmsb}$-1] gehört, die folgende Bedingung erfüllt ist: F(k-1) < ($r_{msb}$, $r_{lsb}$) $\leq$ F(k), wobei:

      - ($r_{msb}$, $r_{lsb}$) die über $N_r$ Bits codierte Binärzahl ist, deren $N_{msb}$ höherwertige Bits gleich den $N_{msb}$ Bits der gekürzten Zufallszahl $r_{msb}$ und deren ($N_r$-$N_{msb}$) niedrigerwertige Bits gleich den ($N_r$-$N_{msb}$) Bits der Zahl $r_{lsb}$ sind,
      - $N_{msb}$ eine positive Ganzzahl ist, die kleiner ist als $N_r$,

   • ein zweites Suchmodul (22), das zu Folgendem fähig ist:

      - Erfassen der $N_{msb}$ höherwertigen Bits einer von der Erzeugungseinheit erzeugten Zufallszahl r, wobei diese $N_{msb}$ Bits eine empfangene gekürzte Zufallszahl $r_{msb}$ bilden,
      - als Antwort Suchen der empfangenen gekürzten Zufallszahl $r_{msb}$ in der gekürzten Tabelle (20), und
      - wenn die Suche erfolgreich ist, Übertragen der Abtastung k, die durch die gekürzte Tabelle der empfangenen gekürzten Zufallszahl $r_{msb}$ zugeordnet ist, als Zufallszahl, die nach dem Gesetz $\rho$ gezogen wurde, und andernfalls, wenn die Suche erfolglos ist, Ausgeben eines Fehlersignals, und

- die langsame Abtasteinheit (40) zu Folgendem fähig ist:

   • Empfangen des Fehlersignals und der von der Erzeugungseinheit erzeugten Zufallszahl r, deren $N_{msb}$ höherwertige Bits gleich der gekürzten Zufallszahl $r_{msb}$ sind, die zur Ausgabe dieses Fehlersignals geführt hat, dann
   • als Antwort Auswählen anhand der vollständigen Tabelle (44) und Übermitteln der einzigen Abtastung k, die die Bedingung F(k-1) < r $\leq$ F(k) erfüllt und die nicht von der schnellen Abtasteinheit übermittelt werden konnte,

- die Erzeugungseinheit (12) fähig ist, zu Beginn jedes Abtastintervalls eine neue Zufallszahl r zu erzeugen, wobei diese Abtastintervalle periodisch wiederholt werden, **dadurch gekennzeichnet, dass** die Vorrichtung umfasst:

• mehrere schnelle Abtasteinheiten ($ER_i$), die jeweils fähig sind, parallel zu den anderen schnellen Abtasteinheiten und parallel zur langsamen Abtasteinheit zu arbeiten, und
• ein Arbitermodul (70), das fähig ist, bei jedem neuen Abtastintervall eine neue schnelle Abtasteinheit zu aktivieren, die von der schnellen Abtasteinheit, die im vorherigen Abtastintervall aktiviert war, verschieden ist, um die $N_{msb}$ Bits der Zufallszahl r, die zu Beginn dieses neuen Abtastintervalls erzeugt wurde, mit dieser neuen aktivierten schnellen Abtasteinheit zu bearbeiten.

2. Vorrichtung nach Anspruch 1, wobei die langsame Abtasteinheit (40) fähig ist, für jede der schnellen Abtasteinheiten Folgendes zu empfangen:

- das Fehlersignal, das von dieser schnellen Abtasteinheit erzeugt wurde, und
- die Zufallszahl r, die zur Erzeugung dieses Fehlersignals geführt hat.

3. Vorrichtung nach einem der vorhergehenden Ansprüche, wobei:

- die Vorrichtung einen Speicher ($MF_i$) umfasst, der zu Folgendem fähig ist:

• Empfangen und Speichern jeder übermittelten Abtastung k, und
• am Ausgang der Vorrichtung Bereitstellen der ältesten gespeicherten Abtastung k am Ende jedes Abtastintervalls und solange es Abtastungen k gibt, die in diesem Speicher gespeichert sind.

4. Vorrichtung nach Anspruch 3, wobei:

- die Anzahl der schnellen Abtasteinheiten ($ER_i$) zwischen drei und fünf liegt,
- die Größe des Speichers das Speichern von maximal $T_{MF}$ Abtastungen k erlaubt, wobei die Anzahl $T_{MF}$ zwischen acht und sechzehn liegt, und
- die Anzahl $N_{msb}$ zwischen vier und sechs liegt.

5. Vorrichtung nach einem der vorhergehenden Ansprüche, wobei die Anzahl $N_{msb}$ fünfmal kleiner ist als die Anzahl $N_r$.

6. Vorrichtung nach einem der vorhergehenden Ansprüche, wobei die Anzahl $N_r$ eine positive Ganzzahl ist, die mindestens zwei- oder viermal größer ist als die Anzahl $N_k$.

7. Vorrichtung nach einem der vorhergehenden Ansprüche, wobei die Erzeugungseinheit (12) fähig ist, zunächst die $N_{msb}$ Bits der Zufallszahl r zu erzeugen und die schnelle Abtasteinheit fähig ist, die durch die Erzeugungseinheit (12) erfolgende Erzeugung der ($N_r$-$N_{msb}$) folgenden Bits der Zufallszahl r jedes Mal zu hemmen, wenn die Suche in der gekürzten Tabelle (20) erfolgreich ist.

8. Vorrichtung nach einem der vorhergehenden Ansprüche, wobei:

- die gekürzte Tabelle (20) $2^{N_{msb}-s}$ Zellen enthält, die in aufsteigender Indexreihenfolge geordnet sind, wobei s eine positive Ganzzahl oder null ist, die kleiner als $N_{msb}$ ist, wobei jede Abtastung k, die durch die gekürzte Tabelle einer Zufallszahl $r_{msb}$ zwischen 0 und $2^{N_{msb}-s}-1$ zugeordnet wird, in der Zelle gespeichert wird, deren Index gleich dieser gekürzten Zufallszahl $r_{msb}$ ist, die anderen Zellen, die keine Abtastung k enthalten, ein Fehlersymbol enthalten, das von allen Abtastungen k verschieden ist, und
- das zweite Suchmodul (22) fähig ist, direkt den Inhalt der Zelle in der verkürzten Tabelle zu lesen, deren Index gleich der empfangenen verkürzten Zufallszahl $r_{msb}$ ist, die in dieser verkürzten Tabelle gesucht wurde, und wenn der gelesene Inhalt eine Abtastung k ist, diese Abtastung k zu übermitteln, und wenn der gelesene Inhalt das Fehlersymbol ist, das Fehlersignal auszugeben.

9. Vorrichtung nach einem der vorhergehenden Ansprüche, wobei das Gesetz ρ ein diskretes und beschränktes Gaußsches Wahrscheinlichkeitsgesetz ist.

10. Verfahren zur Erzeugung einer Zufallszahl, wobei diese Zufallszahl über $N_k$ Bits codiert ist und nach einem diskreten und beschränkten uneinheitlichen Wahrscheinlichkeitsgesetz ρ gezogen wird, wobei dieses Verfahren umfasst:

- einen Schritt (120) des Bereitstellens einer vollständigen Tabelle, die jeder möglichen Wahrscheinlichkeit F(k) der kumulativen Dichte der Wahrscheinlichkeit F des Gesetzes ρ die entsprechende über $N_k$ Bits codierte Abtastung k zuordnet, wobei jede Wahrscheinlichkeit F(k) über $N_F$ Bits codiert ist und die Anzahl $N_F$ größer als die Anzahl $N_k$ und kleiner oder gleich der Anzahl $N_r$ ist,
- einen Schritt (124) des Erzeugens von Zufallszahlen, die jeweils über $N_r$ Bits codiert sind und nach einem einheitlichen Gesetz gezogen werden, wobei die Anzahl $N_r$ eine positive Ganzzahl ist, die größer oder gleich der Anzahl $N_k$ ist, und dieser Schritt des Erzeugens das Erzeugen einer neuen Zufallszahl r zu Begin jedes Abtastintervalls umfasst, wobei diese Abtastintervalle periodisch wiederholt werden,
- einen Schritt (140) des langsamen Abtastens, wobei dieser Schritt umfasst:

• Empfangen der $N_r$ Bits einer Zufallszahl r, die von der Erzeugungseinheit erzeugt wurde,
• als Antwort Auswählen der einzigen Wahrscheinlichkeit F(k) wie F(k-1) < r ≤ F(k) aus der vollständigen Tabelle, dann
• Übermitteln der Abtastung k, die durch die vollständige Tabelle der ausgewählten Wahrscheinlichkeit F(k) zugeordnet wurde, als Zufallszahl, die nach dem Gesetz ρ gezogen wurde,

- Bereitstellen (120) einer gekürzten Tabelle, die kleiner ist als die vollständige Tabelle und gekürzten Zufallszahlen $r_{msb}$, die nur über $N_{msb}$ Bits codiert sind, die einzige Abtastung k zuordnet, für die unabhängig von der Zahl $r_{lsb}$, die zum Intervall $[0; 2^{Nr-Nmsb}-1]$ gehört, die folgende Bedingung erfüllt ist: F(k-1) < $(r_{msb}, r_{lsb})$ ≤ F(k), wobei:

- $(r_{msb}, r_{lsb})$ die über $N_r$ Bits codierte Binärzahl ist, deren $N_{msb}$ höherwertige Bits gleich den $N_{msb}$ Bits der gekürzten Zufallszahl $r_{msb}$ und deren $(N_r-N_{msb})$ niedrigerwertige Bits gleich den $(N_r-N_{msb})$ Bits der Zahl $r_{lsb}$ sind,
- $N_{msb}$ eine positive Ganzzahl ist, die kleiner ist als $N_r$,

- einen Schritt des schnellen Abtastens, der umfasst:

• Empfangen (128) der $N_{msb}$ höherwertigen Bits einer von der Erzeugungseinheit erzeugten Zufallszahl r, wobei diese $N_{msb}$ Bits eine empfangene gekürzte Zufallszahl $r_{msb}$ bilden,
• als Antwort Suchen (130) dieser empfangenen gekürzten Zufallszahl $r_{msb}$ in der gekürzten Tabelle und
• wenn die Suche erfolgreich ist, Übermitteln (132) der Abtastung k, die durch die gekürzte Tabelle der empfangenen gekürzten Zufallszahl $r_{msb}$ zugeordnet wurde, als Zufallszahl, die nach dem Gesetz ρ gezogen wurde, und andernfalls, wenn die Suche erfolglos ist, Ausgeben eines Fehlersignals, dann

- als Antwort auf das Empfangen des Fehlersignals und der von der Erzeugungseinheit erzeugten Zufallszahl r, deren $N_{msb}$ höherwertige Bits gleich der gekürzten Zufallszahl $r_{msb}$ sind, die zur Ausgabe dieses Fehlersignals geführt hat, Auslösen der Ausführung des Schrittes (140) des langsamen Abtastens, um anhand der vollständigen Tabelle die einzige Abtastung k, die die Bedingung F(k-1) < r ≤ F(k) erfüllt und die am Ende der Phase des schnellen Abtastens nicht übermittelt werden konnte, auszuwählen und zu übermitteln, **dadurch gekennzeichnet, dass** das Verfahren umfasst:
- Bereitstellen mehrerer schneller Abtasteinheiten ($ER_i$), die jeweils fähig sind, parallel zu den anderen schnellen Abtasteinheiten und parallel zur langsamen Abtasteinheit zu arbeiten, und
- bei jedem neuen Abtastintervall Aktivieren einer neuen Abtasteinheit, die von der schnellen Abtasteinheit, die im vorherigen Abtastintervall aktiviert war, verschieden ist, um die $N_{msb}$ Bits der Zufallszahl r, die zu Beginn dieses neuen Abtastintervalls erzeugt wurde, mit dieser neuen aktivierten schnellen Abtasteinheit zu bearbeiten.

**11.** Durch einen Mikroprozessor lesbares Informationsspeichermedium, **dadurch gekennzeichnet, dass** es Anweisungen zur Ausführung eines Verfahrens nach Anspruch 10 umfasst, wenn diese Anweisungen durch den Mikroprozessor ausgeführt werden.

**Claims**

**1.** Device for generating a random number, this random number being coded on $N_k$ bits and drawn according to a nonuniform, discrete and bounded probability distribution ρ, this device comprising:

- a generator (12) of random numbers that are coded on $N_r$ bits and drawn according to a uniform distribution, the number $N_r$ being a positive integer number higher than or equal to the number $N_k$,
- a slow sampler (40) comprising:

    • a complete table (44) associating, with each possible probability $F(k)$ of the cumulative probability density $F$ of the distribution $\rho$, the corresponding sample k coded on $N_k$ bits, each probability $F(k)$ being coded on $N_F$ bits, the number $N_F$ being higher than the number $N_k$ and lower than or equal to the number $N_r$,
    • a first searching module (46) able:

        - to receive the $N_r$ bits of a random number r generated by the generator,
        - in response, to select, from the complete table, the only probability $F(k)$ such that $F(k-1) < r \leq F(k)$, then
        - to transmit the sample k, associated by the complete table with the selected probability $F(k)$, by way of random number drawn according to the distribution P,

- a fast sampler ($ER_i$) comprising:

    • a truncated table (20), which is smaller than the complete table, associating with truncated random numbers $r_{msb}$ coded only on $N_{msb}$ bits, the only sample k for which, whatever the number $n_{lsb}$ belonging to the interval $[0; 2^{Nr-Nmsb}-1]$, the following condition is met: $F(k-1) < (r_{msb}, r_{lsb}) \leq F(k)$, where:

        - $(r_{msb}, r_{lsb})$ is the binary number coded on $N_r$ bits and the $N_{msb}$ most significant bits of which are equal to the $N_{msb}$ bits of the truncated random number $r_{msb}$ and the $(N_r-N_{msb})$ least significant bits of which are equal to the $(N_r-N_{msb})$ bits of the number $r_{lsb}$,
        - $N_{msb}$ is a positive integer number lower than $N_r$,

    • a second searching module (22) able:

        - to acquire the $N_{msb}$ most significant bits of a random number r generated by the generator, these $N_{msb}$ bits forming a received truncated random number $r_{msb}$,
        - in response, to search for the received truncated random number $r_{msb}$ in the truncated table (20), and
        - if the search is successful, to transmit the sample k, associated, by the truncated table, with the received truncated random number $r_{msb}$, by way of random number drawn according to the distribution $\rho$, and, alternatively, if the search is unsuccessful, to send a failure signal, and

- the slow sampler (40) is able to:

    • receive the failure signal and the random number r generated by the generator and the $N_{msb}$ most significant bits of which are equal to the truncated random number $r_{msb}$ that led to this failure signal being sent, then
    • in response, to select, using the complete table (44), and to transmit the only sample k that meets the condition $F(k-1) < r \leq F(k)$ and that was unable to be transmitted by the fast sampler,

- the generator (12) is able to generate a new random number r at the start of each sampling interval, these sampling intervals being repeated periodically,

**characterized in that** the device comprises:

    • a plurality of fast samplers ($ER_i$) each able to work in parallel with the other fast samplers and in parallel with the slow sampler, and
    • an arbitrating module (70) able to activate, on each new sampling interval, a new fast sampler different from the fast sampler activated in the preceding sampling interval, to process the $N_{msb}$ bits of the random number r generated at the start of this new sampling interval, with this new activated fast sampler.

2.  Device according to Claim 1, wherein the slow sampler (40) is able, for each of the fast samplers, to receive:

    - the failure signal generated by this fast sampler, and
    - the random number r that led to the generation of this failure signal.

3.  Device according to either one of the preceding claims, wherein:

- the device comprises a memory ($MF_i$) able:

  • to receive and to store each transmitted sample k, and
  • to deliver as output from the device, at the end of each sampling interval and provided that there are samples k stored in this memory, the oldest stored sample k.

4. Device according to Claim 3, wherein:

  - the number of fast samplers ($ER_i$) is comprised between three and five,
  - the size of the memory allows at most $T_{MF}$ samples k to be stored, where the number $T_{MF}$ is comprised between eight and sixteen, and
  - the number $N_{msb}$ is comprised between four and six.

5. Device according to any one of the preceding claims, wherein the number $N_{msb}$ is five times smaller than the number $N_r$.

6. Device according to any one of the preceding claims, wherein the number $N_r$ is a positive integer number at least two or four times higher than the number $N_k$.

7. Device according to any one of the preceding claims, wherein the generator (12) is able to firstly generate the $N_{msb}$ bits of the random number r and the fast sampler is able to inhibit the generation, by the generator (12), of the $(N_r-N_{msb})$ bits following the random number r each time the search in the truncated table (20) is successful.

8. Device according to any one of the preceding claims, wherein:

  - the truncated table (20) contains $2^{Nmsb\text{-}s}$ cells ordered in order of increasing index, where s is a positive or zero integer number lower than $N_{msb}$, each sample k associated, by the truncated table, with a random number $r_{msb}$ comprised between 0 and $2^{Nmsb\text{-}s}-1$ being stored in the cell the index of which is equal to this truncated random number $r_{msb}$, the other cells that contain no sample k containing a failure symbol different from all the samples k, and
  - the second searching module (22) is able to directly read the content of the cell in the truncated table the index of which is equal to the received truncated random number $r_{msb}$ searched for in this truncated table and, when the read content is a sample k, to transmit this sample k and, when the read content is the failure symbol, to send the failure signal.

9. Device according to any one of the preceding claims, wherein the distribution $\rho$ is a discrete and bounded Gaussian probability distribution.

10. Method for generating a random number, this random number being coded on $N_k$ bits and drawn according to a nonuniform, discrete and bounded probability distribution $\rho$, this method comprising:

  - a step (120) of providing a complete table associating, with each possible probability F(k) of the cumulative probability density F of the distribution $\rho$, the corresponding sample k coded on $N_k$ bits, each probability F(k) being coded on $N_F$ bits, the number $N_F$ being higher than the number $N_k$ and lower than or equal to a number $N_r$,
  - a step (124) of generating random numbers each coded on $N_r$ bits and drawn according to a uniform distribution, the number $N_r$ being a positive integer number higher than or equal to the number $N_k$, this generating step comprising the generation of a new random number r at the start of each sampling interval, these sampling intervals being repeated periodically,
  - a slow-sampling step (140), this step comprising:

    • receiving the $N_r$ bits of a random number r generated by the generator,
    • in response, selecting, from the complete table, the only probability F(k) such that $F(k-1) < r \leq F(k)$, then
    • transmitting the sample k, associated by the complete table with the selected probability F(k), by way of random number drawn according to the distribution P,

  - providing (120) a truncated table, which is smaller than the complete table, associating with truncated random numbers $r_{msb}$, coded only on $N_{msb}$ bits, the only sample k for which, whatever the number $n_{lsb}$ belonging to the interval [0; $2^{Nr\text{-}NmSb}-1$], the following condition is met: $F(k-1) < (r_{msb}, r_{lsb}) \leq F(k)$, where:

- $(r_{msb}, r_{lsb})$ is the binary number coded on $N_r$ bits and the $N_{msb}$ most significant bits of which are equal to the $N_{msb}$ bits of the truncated random number $r_{msb}$ and the $(N_r-N_{msb})$ least significant bits of which are equal to the $(N_r-N_{msb})$ bits of the number $r_{lsb}$,
- $N_{msb}$ is a positive integer number lower than $N_r$,

- a fast-sampling step comprising:

• receiving (128) the $N_{msb}$ most significant bits of a random number r generated by the generator, these $N_{msb}$ bits forming a received truncated random number $r_{msb}$,
• in response, searching (130) for this received truncated random number $r_{msb}$ in the truncated table, and
• if the search is successful, transmitting (132) the sample k, associated, by the truncated table, with the received truncated random number $r_{msb}$, by way of random number drawn according to the distribution $\rho$, and, alternatively, if the search is unsuccessful, sending a failure signal, then

- in response to the reception of the failure signal and of the random number r generated by the generator and the $N_{msb}$ most significant bits of which are equal to the truncated random number $r_{msb}$ that led to this failure signal being sent, triggering the execution of the slow-sampling step (140) with a view to selecting, using the complete table, and transmitting the only sample k that meets the condition $F(k-1) < r \leq F(k)$ and that was unable to be transmitted at the end of the fast-sampling phase, **characterized in that** the method comprises:
- providing a plurality of fast samplers ($ER_i$) each able to work in parallel with the other fast samplers and in parallel with the slow sampler, and
- activating, on each new sampling interval, a new fast sampler different from the fast sampler activated in the preceding sampling interval, to process the $N_{msb}$ bits of the random number r generated at the start of this new sampling interval, with this new activated fast sampler.

11. Data-storage medium that is readable by a microprocessor, **characterized in that** this medium comprises instructions for executing a method according to Claim 10, when these instructions are executed by the microprocessor.

Fig. 1

Fig. 2

Fig. 3

Fig. 4

Fig. 5

Fig. 6

Fig. 7

EP 3 852 304 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **PEIKERT CHRIS ED et al.** An efficient and parallel Gaussian sampler for lattices. *Annual International Conférence on the Theory and applications of cryptographie techniques, Eurocrypt 2018, Berlin, Heidelberg,* 15 Août 2010, 80-97

- **CHAOHUI DU et al.** Toward efficient discrète Gaussian sampling for lattice-based cryptography. *2015 25th International Conférence on Field Programmable Logic and Application, Imperial College,* 02 Septembre 2015, 1-6
- **THOMAS POPPELMAN et al.** *Enhanced Lattice-Based Signature on Reconfigurable Hardware Extended Version,* 20 Février 2015